# EUROPÄISCHE PATENTANMELDUNG

(11) **EP 2 441 583 A2**
(43) Veröffentlichungstag der Anmeldung: **18.04.2012**
(21) Anmeldenummer: 11008169.2
(22) Anmeldetag: 10.10.2011
(51) Int. Cl.: B32B 37/20, B32B 38/14, B42D 15/10

(54) **Druckträgerverbundmaterial für Mehrfarbendruckkarten, Kartenkörper umfassend das Druckträgerverbundmaterial und Herstellungsverfahren dafür**

(30) Priorität: 12.10.2010 DE 102010048240
(71) Anmelder: Giesecke & Devrient GmbH, 81677 München (DE)
(72) Erfinder: Perlitz, Lucas, 80339 München (DE); Kaufmann, Peter, 81927 München (DE)

(57) **Zusammenfassung**

Die Erfindung betrifft ein Druckträgerverbundmaterial (1;1') zur Verwendung als Schicht in einem Kartenkörper (2), insbesondere einer Mehrfarbendruckkarte, das eine Druckträgerschicht (3; 3') aus einem ersten Kunststoffmaterial, eine Designdruckschicht (5; 5') auf einer Oberfläche der Druckträgerschicht, und eine Druckschutzschicht (4; 4') aus einem zweiten Kunststoffmaterial aufweist, wobei die Druckträgerschicht (3; 3') und die Druckschutzschicht (4; 4') so miteinander verbunden sind, dass die Designdruckschicht (5; 5') zwischen der Druckträgerschicht (3; 3') und der Druckschutzschicht (4; 4') eingeschlossen ist. Die Erfindung betrifft auch ein Verfahren zur Herstellung des Druckträgerverbundmaterials (1; 1'), einen Kartenkörper (2), insbesondere einen Kartenkörper einer Mehrfarbendruckkarte, und ein Verfahren zur Herstellung des Kartenkörpers. Der Kartenkörper (2) besteht aus mehreren miteinander verbundenen Kunststoffschichten, wobei das erfindungsgemäße Druckträgerverbundmaterial (1;1') als mindestens eine der Schichten verwendet wird.

## Beschreibung

Die vorliegende Erfindung betrifft ein Druckträgerverbundmaterial, das zur Ausstattung einer Mehrfarbendruckkarte mit einer vorderseitig und/ oder rückseitig erkennbaren Bedruckung geeignet ist. Die Erfindung betrifft außerdem ein Verfahren zur Herstellung des Druckträgerverbundmaterials, die Verwendung des Druckträgerverbundmaterials zur Herstellung eines Kartenkörpers, einen unter Verwendung des Druckträgerverbundmaterials hergestellten Kartenkörper, und ein Verfahren zur Herstellung des erfindungsgemäßen Körpers.

Karten wie Ausweiskarten, Kreditkarten und andere Datenträgerkarten haben typischerweise einen Kartenkörper aus mehreren übereinander angeordneten und miteinander laminierten Kunststofffolien. Die Karten sind in der Regel auch bedruckt, d.h. sie weisen mindestens ein Druckbild auf, beispielsweise in Form alphanumerischer Zeichen, geometrischer oder figürlicher Darstellungen, einfarbig, mehrfarbig, mit sichtbaren Farben oder bei bestimmter Beleuchtung fluoreszierenden Farben, grob strukturierter oder fein strukturierter Druckbilder, etc. Die Druckbilder sind, um sie sowohl vor Verschleiß als auch vor einem absichtlichen Entfernen zu Fälschungszwecken zu schützen, in den Schichtaufbau der Kartenkörper integriert. Dabei ergeben sich zahlreiche Probleme:
Druckfarben haften auf Kunststofffolien nur unbefriedigend, weshalb die zu bedruckende Folienschicht vor dem Bedrucken haftungsfördernd vorbehandelt werden muss, in der Regel durch Auftragen eines Primers, und gegebenenfalls durch Coronabehandlung. Auch die mit der Druckschicht zu verbindende Folie muss geeignet beschichtet werden. Dabei müssen Druckfarben, Folienmaterialien und Haftvermittler sowie das verwendete Druckverfahren aufeinander abgestimmt werden. Dies ist besonders schwierig, wenn gleichzeitig verschiedenartige Farben verdruckt werden sollen. Bei der Vielzahl von verwendeten Kartenmaterialien, Druckfarben und Druckverfahren bedeutet dies einen beträchtlichen Aufwand an Arbeitszeit und Kosten.

Außerdem sind die Druckschichten sehr empfindlich, insbesondere gegen Abrieb oder sonstige mechanische Beschädigung, weshalb bedruckte Folien nicht einfach aufgerollt und gelagert werden können. Dabei könnte das Druckbild durch die auftretenden mechanischen Belastungen beschädigt werden. Statt Folien in Rollenform (Bandform) zu bedrucken und erneut aufzurollen, werden daher Folienbögen bedruckt und gestapelt, doch auch dabei kann es Probleme geben, denn die bedruckten Folienbögen neigen zum Verblocken und können nur schwer vereinzelt und transportiert werden. Beim Vereinzeln kann das Druckbild beschädigt werden.

Zur Herstellung eines Kartenkörpers werden die Kunststofffolien, die den späteren Kartenkörper bilden sollen, in der gewünschten Reihenfolge gestapelt und laminiert. Bevorzugt werden thermoplastische Folienmaterialien verwendet, da diese besonders gut laminierbar sind. Je nachdem, ob die Karte nur ein an einer Seite (vorderseitig oder rückseitig) sichtbares Druckbild aufweisen soll, oder ob sie sowohl vorderseitig als auch rückseitig ein Druckbild zeigen soll, muss eine der Folien des Kartenkörpers oder müssen zwei der Folien des Kartenkörpers vor dem Laminieren bedruckt werden. Dabei ist für jede zu bedruckende Folie eine Abstimmung von Folienmaterial, Haftvermittler, Druckfarben und Druckverfahren erforderlich. Auch die Beschichtung der mit der Druckseite der bedruckten Folie zu laminierenden Folie ist auf die verwendeten Folienmaterialien und Druckfarben abzustimmen.

Ein guter Laminatverbund wird durch ein Laminieren unter Druck und bei einer Temperatur zwischen etwa 120°C und 200°C erreicht. Bei diesen Temperaturen verlieren die thermoplastischen Kartenfolien an Dimensionsstabilität, wodurch das Druckbild deformiert werden kann. Bei entsprechend niedrigeren Temperaturen, bei denen ein Deformieren vermieden werden kann, wird jedoch kein guter Laminatverbund erreicht.

Insgesamt ist die Herstellung bedruckter Karten, insbesondere die Herstellung von Mehrfarbendruckkarten, umständlich, zeitintensiv und kostspielig, und die Produktqualität ist nicht immer zufriedenstellend, insbesondere hinsichtlich Druckqualität und Laminierungsfestigkeit.

Aufgabe der vorliegenden Erfindung ist es daher, eine Möglichkeit zu schaffen, die oben genannten Nachteile des Stands der Technik zu vermeiden und einen Kartenkörper mit vorderseitig und/oder rückseitig erkennbarem Druckbild einfacher, schneller, präziser, kostengünstiger und in besserer Qualität herzustellen, als dies nach dem Stand der Technik möglich ist.

Die Aufgabe wird gelöst durch das Druckträgerverbundmaterial mit den Merkmalen des Anspruchs 1, durch das Verfahren zur Herstellung eines Druckträgerverbundmaterials mit den Merkmalen des Anspruchs 7, durch den Kartenkörper mit den Merkmalen des Anspruchs 12, und durch die Verfahren zur Herstellung eines Kartenkörpers mit den Merkmalen der Ansprüche 17 und 19. Spezielle Ausführungsformen der vorliegenden Erfindung sind in den jeweiligen abhängigen Ansprüchen angegeben.

Das erfindungsgemäße Druckträgerverbundmaterial weist eine Druckträgerschicht aus einem ersten Kunststoffmaterial und eine Druckschutzschicht aus einem zweiten Kunststoffmaterial auf. Die Kunststoffmaterialien sind bevorzugt solche Materialien, wie sie bei der Herstellung von Kartenkörpern üblicherweise verwendet werden, insbesondere Thermoplaste. Beispiele für geeignete Kunststoffmaterialien sind Polyester, Polycarbonate, Polyamide, Polyimide, Polyolefine wie Polyethylen und Polypropylen, chloriertes Polyethylen, Polystyrol, Polyethylenterephthalat, biaxial gerecktes Polyethylenterephthalat, Polybutylenterephthalat, Polyethylen-Terephthalat-Glycol-Copolymer (PETG), Polyvinylchlorid (PVC), Acrylnitril-Butadien-Styrol (ABS), Polyurethane, Cycloolefin-Copolymere, und Blends dieser Kunststoffe. Besonders bevorzugt sind PC, PETG, PVC und ABS. Das erste und das zweite Kunststoffmaterial können gleich oder verschieden sein

Die Druckträgerschicht sowie die Druckschutzschicht können jeweils transparent oder opak sein, wobei in der Regel mindestens eine der Schichten transparent ist, um die Sichtbarkeit des Druckbilds zu gewährleisten. Gelegentlich kann es jedoch auch erwünscht sein, einen Druck unsichtbar anzubringen, beispielsweise maschinell nachweisbare Magnetpartikel unsichtbar zu verdrucken. Gemäß einer bevorzugten Ausführungsform ist die Druckträgerschicht transparent, während die Druckschutzschicht opak ist. Opazität kann in an sich bekannter Weise durch geeignete Zusatzstoffe oder durch Vakuolen erzeugt werden.

Die Kunststoffmaterialien können generell auf diesem Gebiet übliche Zusatzstoffe enthalten, beispielsweise Füllstoffe, Farbpigmente, Oxidationsstabilisatoren, UV-Stabilisatoren, Flammhemmstoffe, optische Aufheller, und andere bekannte Zusatzstoffe.

Das Druckbild kann normalerweise nicht unmittelbar auf die Druckträgerschicht aufgedruckt werden. Vielmehr ist es meist erforderlich, zuerst eine haftungsverbessernde Schicht wie eine Primerschicht aufzutragen und darauf die Druckschicht aufzutragen. Die Druckschicht kann die Druckträgerschicht vollflächig bedecken oder nur bereichsweise aufgetragen sein. Die Primerschicht kann ebenfalls vollflächig oder in Gestalt des Druckbilds aufgetragen sein. Auf die Druckschutzschicht wird vor dem Verbinden mit der Druckträgerschicht beziehungsweise der Druckschicht ebenfalls eine Primerschicht oder eine geeignete andere Beschichtung, die die Haftung an der Druckschicht fördert, aufgetragen. Die einzelnen Materialien (Folienmaterialien, Druckfarbenmaterialien und Beschichtungsmaterialien) müssen aufeinander und auf das verwendete Druckverfahren abgestimmt werden, um eine zuverlässige, d.h. untrennbare, Haftung der Schichten aneinander zu erreichen. Alternativ oder zusätzlich zum Auftragen einer haftungsfördernden Schicht auf die an die Druckschicht angrenzenden Oberflächen der Druckträgerschicht und der Druckschutzschicht kann zur Haftungsverbesserung der Druckschicht auch eine Coronabehandlung der jeweiligen Oberflächen durchgeführt werden.

Nach dem Aufdrucken der Druckschicht werden die Druckträgerschicht und die Druckschutzschicht so miteinander verbunden, dass sie die Druckschicht zwischen sich einschließen, wobei die haftungsfördernd vorbehandelte Oberfläche der Druckschutzschicht mit der Druckschicht verbunden wird. Das Verbinden erfolgt bevorzugt durch Verkleben mittels einer Klebstoffschicht. Das Verkleben mittels einer Klebstoffschicht hat den Vorteil, dass die Folienmaterialien nicht erhitzt werden müssen, dass also keine Deformierungen der Folienmaterialien und damit des Druckbilds zu befürchten sind. Außerdem können durch den Klebstoff der Klebstoffschicht Unebenheiten im Druckbild ausnivelliert werden.

Wenn für die Druckträgerschicht und die Druckschutzschicht Folienmaterialien verwendet werden, die bei Laminierungstemperaturen nicht zum Verformen neigen, können die Druckträgerschicht und die Druckschutzschicht mit der dazwischen eingeschlossenen Druckschicht auch miteinander laminiert werden.

Der Klebstoff für die Klebstoffschicht ist nicht in besonderer Weise eingeschränkt. Es können beispielsweise UV-aktivierbare Klebstoffe verwendet werden, deren Verarbeitung besonders einfach ist. Es ist auch möglich, Hotmelt-Klebstoffe oder anaerobe Kleber zu verarbeiten. Weiterhin können Klebesysteme eingesetzt werden, deren Härtung bzw. Trocknung durch die Beaufschlagung mit Druck oder auch den Einsatz von IR-Strahlern, Röntgenstrahlern oder anderen elektromagnetischen Strahlern erreicht wird. Die Klebstoffschicht kann ihrerseits für besondere Effekte genutzt werden. Beispielsweise kann der Klebstoff im Volumen sichtbare Farbstoffe oder Fluoreszenzfarbstoffe enthalten, oder es können feste Farbstoffpartikel im Volumen des Klebstoffs enthalten sein oder auf seine Oberfläche aufgestreut werden, gegebenenfalls nach UV-Aktivierung des Klebstoffs. Wird dabei eine Schablone verwendet, so kann mit Hilfe der Klebstoffschicht ein zusätzliches Druckbild erzeugt werden. Diese Art der Druckbilderzeugung bietet sich insbesondere für alle Materialien an, die mittels der bevorzugten Druckverfahren nur schwierig gedruckt werden können. Ein Beispiel sind Metallpartikel, die im bevorzugten Ink-Jet-Druckverfahren nur bedingt gedruckt werden können, da sie zum Verstopfen der feinen Düsen neigen.

Alternativ zu einer Klebstoffschicht, die auf die Druckträgerschicht und/oder die Druckschutzschicht aufgetragen wird, kann die Verklebung auch mittels eines doppelseitigen Klebebands erfolgen.

Zusätzlich zu der Druckträgerschicht und der Druckschutzschicht kann das Druckträgerverbundmaterial weitere Folienschichten aufweisen, die bestimmte Funktionen erfüllen, beispielsweise Prägehologramme, Metallisierungen, oder magnetische Merkmale aufweisen. Diese zusätzlichen Schichten können sich im Schichtverbund zwischen der Druckträgerschicht und der Druckschutzschicht befinden und mittels Klebstoffschicht beziehungsweise Klebstoffschichten oder doppelseitiger Klebebänder verklebt werden. Alternativ zur Verklebung kann bei entsprechend temperaturunempfindlichen Folienmaterialien auch eine Laminierung der Schichten durchgeführt werden. Es ist auch möglich, anstelle der Druckträgerschicht eine derartige zusätzliche Schicht mit dem Druckbild auszustatten. In diesem Fall wirkt die zusätzliche Schicht, beispielsweise eine Hologrammfolie, als die eigentliche Druckträgerschicht, und das vorstehend für die Abstimmung von Druckfarben, Folienmaterialien, haftungsverbessernden Materialien und Druckverfahren Gesagte gilt entsprechend für die zusätzliche Schicht. Wenn das Druckträgerverbundmaterial keine zusätzlichen Folienschichten aufweisen soll, aber dennoch mit Sicherheitselementen ausgestattet sein soll, können die Sicherheitselemente auch in der Druckträgerschicht und/ oder der Druckschutzschicht selbst vorgesehen werden. Alternativ kann sowohl die Druckträgerschicht und/ oder die Druckschutzschicht als auch ein oder mehrere zusätzliche Folienmaterialien mit Sicherheitselementen ausgestattet werden.

Das erfindungsgemäße Druckträgerverbundmaterial weist bevorzugt eine Gesamtdicke von etwa 100 bis 500 µm auf. Die Dicke der Druckträgerschicht (auch als "Overlay" bezeichnet) liegt bevorzugt im Bereich von etwa 20 bis 200 um, die Dicke der Druckschutzschicht im Bereich von etwa 20 bis 400 um, und die Dicke der Klebstoffschicht kann zwischen 1 bis 40 um variieren; ein bevorzugter Wert beträgt typischerweise etwa 20 um. Zur Erreichung der gewünschten Gesamtkartendicke können zusätzliche Schichten zwischen der Druckträgerschicht und der Druckschutzschicht vorgesehen sein, deren Dicken entsprechend gewählt werden.

Gemäß einer speziellen Ausführungsform des erfindungsgemäßen Druckträgerverbundmaterials wird die Druckträgerschicht und/ oder die Druckschutzschicht als Doppelschicht aus verschiedenen miteinander flächig verbundenen Folienmaterialien ausgebildet. Eine derartige Doppelschicht ist insbesondere dann vorteilhaft, wenn Druckfarben und/ oder Druckverfahren eingesetzt werden sollen, die bei gängigen Kartenmaterialien praktisch nicht eingesetzt werden können, beispielsweise weil es nicht möglich ist, eine ausreichende Haftung einer Druckschicht auf dem Folienmaterial zu erzielen, während verwendbare Folienmaterialien nicht problemlos in den Schichtaufbau einer Karte integriert werden können. Hier kann Abhilfe geschaffen werden, indem vorab zwei unterschiedliche Folienmaterialien miteinander verbunden, beispielsweise miteinander laminiert werden, wobei eines der Folienmaterialien bedruckbar und das andere Folienmaterial gut in den Schichtaufbau einer Karte integrierbar ist.

Die Herstellung des erfindungsgemäßen Druckträgerverbundmaterials erfolgt in der Weise, dass eine Oberfläche der Druckträgerschicht druckvorbereitend vorbehandelt wird, die druckvorbereitend vorbehandelte Oberfläche mit einer Designdruckschicht bedruckt wird, wobei die Bedruckung einfarbig oder mehrfarbig, vollflächig oder bereichsweise erfolgen kann, die bedruckte Druckträgerschicht mit der Druckschutzschicht so zusammengeführt wird, dass die Designdruckschicht zwischen der Druckträgerschicht und der Druckschutzschicht eingeschlossen wird, und die Schichten dann miteinander verbunden werden. Das Verbinden erfolgt bevorzugt mittels eines Klebstoffs, der auf die Druckschutzschicht oder die bedruckte Druckträgerschicht aufgetragen wird. Vor dem Zusammenführen der Schichten beziehungsweise vor dem Auftragen des Klebstoffs auf die Druckschutzschicht wird die Druckschutzschicht bevorzugt haftungsverbessernd vorbehandelt.

Gemäß einer alternativen Ausführungsform kann auch die Druckschutzschicht auf der der Druckträgerschicht zugewandten Seite vorbehandelt und bedruckt werden.

Die Druckträgerschicht und die Druckschutzschicht werden jeweils bevorzugt als Rollenmaterial bereitgestellt und in einem Rolle-zu-Rolle-Verfahren bedruckt und zu dem erfindungsgemäßen Druckträgermaterial verbunden. Eine ohne mehrere zusätzliche Folienschichten können ebenfalls als Rollenmaterial bereitgestellt und mit der Druckträgerschicht und der Druckschutzschicht so zusammengeführt und verbunden werden, dass die zusätzliche Folienschicht beziehungsweise die zusätzlichen Folienschichten zwischen der Druckträgerschicht und der Druckschutzschicht eingeschlossen werden.

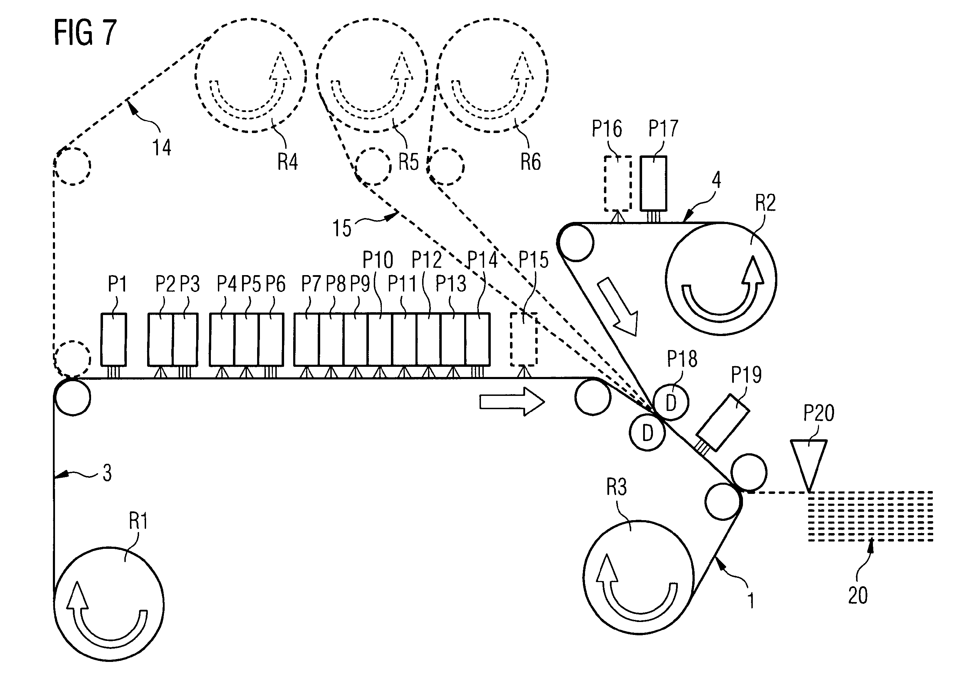

Das Bedrucken erfolgt bevorzugt im Mehrfarbendruck oder durch gleichzeitigen Druck mit mehreren nachgelagerten Farbsystemen. Geeignet sind alle gängigen Druckverfahren wie Flexodruck und andere digitale Rollendruckverfahren, Siebdruck, Offsetdruck, etc. Es können handelsübliche (Digital-) Rollendrucksysteme mit entsprechender Peripherie wie Rollenanlegern, Lackiersystemen, Schneidsystemen, wie sie einem Fachmann bekannt sind, verwendet werden. Das erfindungsgemäße Verfahren zur Herstellung des Druckträgerverbundmaterials wird nachstehend noch anhand der Figur 7 genauer erläutert werden.

Wie erwähnt, ist es bevorzugt, das Druckträgerverbundmaterial in einem Rolle-zu-Rolle-Verfahren als Rollenmaterial herzustellen, wobei das Rollenmaterial gewünschtenfalls zu Druckträgerverbundmaterial-Bögen geschnitten werden kann. Außerdem ist es bevorzugt, die Druckträgerschicht und die Druckschutzschicht mittels einer Klebstoffschicht miteinander zu verkleben, beziehungsweise die Druckträgerschicht, die Druckschutzschicht und die sich gegebenenfalls zwischen diesen Schichten befindlichen weiteren Folienschichten mittels einer geeigneten Anzahl zusätzlicher Klebstoffschichten miteinander zu verkleben. Grundsätzlich ist es jedoch natürlich auch möglich, das Druckträgerverbundmaterial in Bogenform oder sogar als Einzelnutzen in der Größe eines Kartenkörpers herzustellen. Ebenso ist es grundsätzlich möglich, die Schichten des Druckträgerverbundmaterials miteinander zu laminieren, anstatt sie zu verkleben. Die besonderen Vorteile der vorliegenden Erfindung kommen jedoch vor allem bei der Herstellung im Rolle-zu-Rolle-Verfahren und beim Verbinden der Druckträgerverbundmaterial-Schichten mittels Verklebung zum Tragen. Durch die Verklebung wird eine Temperaturbelastung der Folienschichten vermieden, und durch das kontinuierliche Herstellungsverfahren Rolle-zu-Rolle wird eine erhebliche Zeitersparnis erzielt. Auch bei der nachfolgenden Herstellung von Kartenkörpern kann, wenn das Druckträgerverbundmaterial in Rollenform vorliegt, ein Rolle-zu-Rolle-Verfahren angewendet werden, was gegenüber der Einzelherstellung von Bogenmaterialien zu einer erheblichen Zeiteinsparung führt.

Da in dem erfindungsgemäßen Druckträgerverbundmaterial die Druckschicht hervorragend geschützt ist, kann das Druckträgerverbundmaterial, wenn es zur Herstellung eines Kartenkörpers verwendet wird, wie eine unbedruckte Kartenschicht behandelt und verarbeitet werden. Das Druckträgerverbundmaterial ist ein Halbzeug, das problemlos als Rollenmaterial oder als Bogenmaterial lagerbar ist und zu einem passenden Zeitpunkt zur Herstellung eines Kartenkörpers weiterverwendet werden kann. Da sich "außenseitig" lediglich Kunststoffmaterial befindet, unterscheidet sich das Druckträgerverbundmaterial praktisch nicht von einer Kunststofffolie aus demselben Material wie die Druckträgerschicht und die Druckschutzschicht und kann wie eine derartige Kunststofffolie gehandhabt und verwendet werden.

Erfindungsgemäße Kartenkörper bestehen aus mindestens zwei Schichten aus Kunststoffmaterial, die miteinander laminiert oder verklebt sind. Typischerweise bestehen die Kartenkörper aus einer Mehrzahl von miteinander verklebten oder laminierten Schichten. Ein derartiger Kartenkörper weist mindestens eine Druckschicht auf, wobei es sich bevorzugt um eine Designdruckschicht handelt, die an der Vorderseite und/ oder an der Rückseite der Karte erkennbar ist. Die Druckschicht ist in ein erfindungsgemäßes Druckträgerverbundmaterial integriert.

Gemäß einer Ausführungsform weist der Kartenkörper zwei Außenschichten und eine Innenschicht auf. Dabei kann eine Außenschicht oder die Innenschicht oder beide Außenschichten oder eine Außenschicht und die Innenschicht als erfindungsgemäßes Druckträgerverbundmaterial ausgebildet sein. Damit die Designdruckschicht an der Vorderseite oder der Rückseite des Kartenkörpers sichtbar ist, beziehungsweise bei zwei Druckträgerverbundmaterialien sowohl an der Vorderseite als auch an der Rückseite sichtbar ist, werden die Druckträgerverbundmaterialien in dem Kartenkörperschichtaufbau so angeordnet, dass eine transparente Schicht des Druckträgerverbundmaterials nach außen weist. Typischerweise ist die transparente Schicht die rückseitig bedruckte Druckträgerschicht.

Gemäß einer weiteren Ausführungsform weist der Kartenkörper zwei oder mehr Innenschichten auf. In diesem Fall können zwei Innenschichten oder die beiden Außenschichten oder eine Außenschicht und eine Innenschicht als erfindungsgemäßes Druckträgerverbundmaterial ausgebildet sein. Natürlich kann auch nur eine einzige der Kartenschichten, eine Außenschicht oder eine Innenschicht, als erfindungsgemäßes Druckträgerverbundmaterial ausgebildet sein. Je nach Anzahl der Druckträgerverbundmaterialien in dem Kartenkörper ist nur vorderseitig oder nur rückseitig oder alternativ beidseitig, ein Druckbild erkennbar. In dem besonderen Fall, dass sowohl die Druckträgerschicht als auch die Druckschutzschicht des Druckträgerverbundmaterials transparent ist, und auch alle sonstigen Folienschichten des Kartenkörpers transparent sind, ist das Druckbild des Druckträgerverbundmaterials auch bei nur einem Druckträgerverbundmaterial in dem Kartenkörper sowohl vorderseitig als auch rückseitig erkennbar.

Bei zwei Druckträgerverbundmaterialien im Schichtaufbau des Kartenkörpers können die Druckträgerverbundmaterialien gleich oder verschieden sein, sowohl hinsichtlich der Drucke, als auch hinsichtlich der Kunststoffmaterialien, als auch hinsichtlich der Art und Anzahl und Dicke der Schichten. Ebenso können die weiteren Schichten des Kartenkörpers aus gleichen oder verschiedenen Kunststoffmaterialien bestehen. Bevorzugt bestehen die Schichten des Kartenkörpers aus gleichen oder ähnlichen Kunststoffmaterialien.

Gemäß einer besonderen Ausführungsform der vorliegenden Erfindung besteht der Kartenkörper aus zwei Druckträgerverbundmaterialien ohne Innenschicht. In diesem Fall werden die Schichtdicken der Druckträgerverbundmaterialien so gewählt, dass sich eine ausreichende Kartendicke ergibt. Bevorzugt stellen dabei die Druckträgerschichten transparente, nach außen weisende Schichten mit einer Schichtdicke von bevorzugt etwa 20 bis 200 µm dar, während die Druckschutzschichten nach innen weisende opake Schichten mit entsprechend höherer Schichtdicke sind. Erreicht werden sollte eine Gesamtdicke des Kartenkörpers von etwa 500 bis 1000 µm, bevorzugt eine Dicke gemäß den ISO-Normen 7810/7813 von etwa 760 µm.

Die Kartenkörperschichten außer dem Druckträgerverbundmaterial bestehen bevorzugt aus Kunststoffmaterialien wie sie üblicherweise für die Kartenherstellung verwendet werden. Es handelt sich dabei um dieselben bereits genannten Kunststoffmaterialien, die auch für die Druckträgerschicht und die Druckschutzschicht verwendet werden können.

Wie oben erwähnt, kann das Druckträgerverbundmaterial ein oder mehrere Sicherheitsmerkmale aufweisen, die in der Druckträgerschicht und/oder der Druckschutzschicht und/ oder in einer oder mehreren zusätzlichen Folienschichten zwischen der Druckträgerschicht und der Druckschutzschicht vorgesehen sind. Auch die übrigen Kartenschichten können Sicherheitsmerkmale beziehungsweise Sicherheitselemente aufweisen oder es können Sicherheitselemente zwischen zwei Folienschichten vorgesehen werden. Besonders bevorzugt sind Hologrammfolien, Folien mit Magnetstreifen und Folien mit Unterschriftenfeldern. Auch elektronische Bauteile können mit Vorteil in den Schichtaufbau einer Karte integriert werden.

Die erfindungsgemäßen Kartenkörper können hergestellt werden, indem die den späteren Kartenkörper bildenden Folienmaterialien in Bogenform in der gewünschten Reihenfolge gestapelt und miteinander laminiert werden. Diese Herstellungsvariante unterscheidet sich von konventionellen Verfahren der Kartenherstellung dadurch, dass mindestens eine der Kunststoffschichten ein erfindungsgemäßes Druckträgerverbundmaterial ist.

Alternativ können die Kartenkörper jedoch auch hergestellt werden, indem die den späteren Kartenkörper bildenden Kunststoffmaterialien in Rollenform bereitgestellt, in der gewünschten Schichtfolge zusammengeführt und miteinander verklebt oder laminiert werden. Dabei ist mindestens eines der Kunststoffmaterialien ein erfindungsgemäßes Folienverbundmaterial. Bei dieser Herstellungsvariante wird ein Kartenkörpermaterial in Bandform erhalten, von dem Einzelkartenkörper der gewünschten Größe abgetrennt werden können.

Alternativ können die erfindungsgemäßen Kartenkörper durch Faltung eines einzigen Druckträgerverbundmaterials, gegebenenfalls um eine oder mehrere Innenschichten herum, hergestellt werden, wobei ein Kartenkörper mit zwei Außenschichten aus erfindungsgemäßem Druckträgerverbundmaterial erhalten wird. Bei dieser Variante wird beispielsweise das Druckträgerverbundmaterial im Rolle-zu-Rolle-Verfahren in Bandform hergestellt, von dem Band dann Druckträgerverbundmaterial-Bögen abgetrennt, und die Bögen so gefaltet, dass die Designdruckschicht jeweils vorderseitig und rückseitig der Druckträgerverbundmaterial-Doppelschicht sichtbar ist. Die einander berührenden Schichten des gefalteten Druckträgerverbundmaterials werden miteinander verklebt oder laminiert. Schließlich werden von der Druckträgerverbundmaterial-Doppelschicht die endgültigen Kartenkörper abgetrennt. Bei der Faltung der Druckträgerverbundmaterial-Bögen ist auf Registerhaltigkeit der Vorderseite und der Rückseite des endgültigen Kartenkörpers zu achten.

Es ist auch möglich, das Druckträgerverbundmaterial im Rolle-zu-Rolle-Verfahren zu falten. Hierzu muss entweder auf das Verbundmaterial vor dem Falten ein Klebstoff aufgetragen werden oder es schließt sich nach dem Verfahrensschritt des Faltens eine Laminierung des Materials an.

Der Kartenkörper kann ausschließlich aus Druckträgerverbundmaterial hergestellt werden, oder das Druckträgerverbundmaterial kann um eine oder um mehrere Innenschichten herum gefaltet werden. Bei dieser Variante muss wiederum das Druckträgerverbundmaterial so gefaltet werden, dass die Designdruckschichten jeweils vorderseitig und rückseitig sichtbar sind. Die nach der Faltung innen liegende Schicht des Druckträgerverbundmaterials wird dann mit dem späteren Kartenkern, d.h. der einen oder mehreren Innenschichten, verklebt oder laminiert. Anschließend werden wiederum die fertigen Kartenkörper von dem gefalteten Material abgetrennt.

Wenn alle Einzelnutzen eines Druckträgerverbundmaterial-Bogens identisch sind, werden durch die Faltung der Bögen natürlicherweise Kartenkörper erhalten, die identische Vorderseiten und Rückseiten aufweisen. Normalerweise ist es jedoch erwünscht, dass sich die Vorderseite und die Rückseite eines Kartenkörpers unterscheiden. Kartenkörper mit unterschiedlicher Vorderseite und Rückseite können bei dem Faltungsverfahren beispielsweise dadurch erhalten werden, dass ein Druckträgerverbundmaterial in Bandform hergestellt wird, wobei eine Längshälfte des Bands mit der Druckschicht der späteren Kartenvorderseite bedruckt wird, während die andere Längshälfte des Bands mit der Druckschicht der späteren Rückseite der Karte bedruckt wird. Werden von dem fertigen Druckträgerverbundmaterial schließlich Bögen abgetrennt und die Bögen entlang der Mittellinie des früheren Bands gefaltet, erhält man Kartenkörper mit unterschiedlichen Vorderseiten und Rückseiten.

Die vorliegende Erfindung wird nachfolgend anhand von Figuren noch weiter veranschaulicht. Es wird darauf hingewiesen, dass die Figuren nicht maßstabsgetreu und nicht proportionsgetreu sind. Die Figuren sollen die Erfindung lediglich näher erläutern und sind in keiner Weise beschränkend zu verstehen. Es versteht sich daher, dass die in den Figuren veranschaulichten Merkmale nicht nur in den jeweils dargestellten Kombinationen Gegenstand der vorliegenden Erfindung sind, sondern dass auch Merkmale verschiedener Figuren kombiniert werden können, beziehungsweise Merkmale aus einer dargestellten Merkmalskombination weggelassenen werden können, wie ein Fachmann erkennen wird. Gleiche Bezugsziffern bezeichnen jeweils gleiche oder vergleichbare Elemente. Es zeigen:
- Figur 1: einen Schnitt durch einen Kartenkörper des Stands der Technik mit zwei Außenschichten und zwei Innenschichten,
- Figur 2: einen Schnitt durch einen Kartenkörper des Stands der Technik mit zwei Außenschichten und drei Innenschichten,
- Figur 3: einen Schnitt durch eine Ausführungsform eines erfindungsgemäßen Druckträgerverbundmaterials,
- Figur 4: einen Schnitt durch eine andere Ausführungsform eines erfindungsgemäßen Druckträgerverbundmaterials,
- Figur 5: einen Schnitt durch eine weitere Ausführungsform eines erfindungsgemäßen Druckträgerverbundmaterials,
- Figur 6: einen Schnitt durch eine Ausführungsform eines erfindungsgemäßen Druckträgerverbundmaterials, das mehr als zwei Folienschichten aufweist,
- Figur 7: eine schematische Maschinenskizze, die den Prozessablauf bei der Herstellung eines erfindungsgemäßen Druckträgerverbundmaterials veranschaulicht,
- Figur 8: einen Schnitt durch einen erfindungsgemäßen Kartenkörper mit zwei Innenschichten aus erfindungsgemäßem Druckträgerverbundmaterial,
- Figur 8a: einen vergrößerten Ausschnitt aus Figur 8,
- Figur 9: einen Schnitt durch einen erfindungsgemäßen Kartenkörper mit zwei Außenschichten aus erfindungsgemäßem Druckträgerverbundmaterial,
- Figuren 9a, 9b: vergrößerte Ausschnitte aus Figur 9,
- Figur 10: einen Schnitt durch einen erfindungsgemäßen Kartenkörper aus zwei Schichten aus erfindungsgemäßem Druckträgerverbundmaterial; und
- Figur 11: einen Schnitt durch einen um eine Kartenkörperinnenschicht gefalteten Druckträgerverbundmaterial-Bogen.

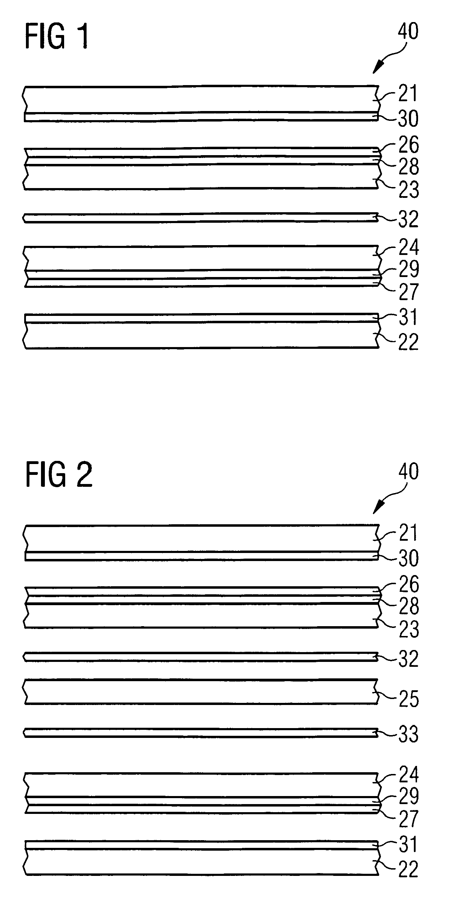

Die Figuren 1 und 2 zeigen Schnitte durch Kartenkörper 40 des Stands der Technik jeweils in teilweiser Explosionsdarstellung. Der in Figur 1 dargestellte Kartenkörper weist vier Schichten aus Kunststofffolie auf, eine erste Außenschicht 21, eine zweite Außenschicht 22, eine erste Innenschicht 23 und eine zweite Innenschicht 24. Die Kartenschichten bestehen aus einem thermoplastischen Material, beispielsweise aus PVC, PC, ABS oder PET-G. Die Kartenschichten können aus verschiedenen Kunststoffmaterialien bestehen, bestehen aber bevorzugt aus gleichen oder ähnlichen Kunststoffmaterialien, insbesondere aus Kunststoffmaterialien mit ähnlichem Erweichungspunkt, um eine gute Laminierbarkeit zu gewährleisten. Die erste Innenschicht 23 ist mit einer ersten Designdruckschicht 26 bedruckt, und die zweite Innenschicht 24 ist mit einer zweiten Designdruckschicht 27 bedruckt. Zur Haftungsverbesserung zwischen Druckschicht und Kunststofffolie ist jeweils eine Primerschicht vorgesehen, eine erste Primerschicht 28 zwischen erster Innenschicht 23 und erster Designdruckschicht 26, und eine zweite Primerschicht 29 zwischen zweiter Innenschicht 24 und zweiter Designdruckschicht 27.

Primerschichten und Designdruckschichten sind in Figur 1 und den folgenden Figuren jeweils als durchgehende Schichten dargestellt. Es versteht sich, dass die Druckschichten meist nur Teilbereiche einer Trägerschicht bedecken, und dass die Primerschichten nur in den Bereichen vorgesehen werden müssen, in denen auch die Druckschichten vorhanden sind.

Die erste Außenschicht 21 und die zweite Außenschicht 22 sind jeweils mit einer ersten Beschichtung 30 bzw. einer zweiten Beschichtung 31 beschichtet. Diese Beschichtungen dienen der Haftungsverbesserung der Außenschichten 21 und 22 an den Druckschichten 26 bzw. 27. Zwischen den Innenschichten 23 und 24 ist in der gezeigten Ausführungsform ein Kaschierklebstoff 32 vorgesehen.

Die Materialien der Kartenschichten 21 und 23, der ersten Primerschicht 28 und der ersten Beschichtung 30 , sowie der Kartenschichten 22 und 24, der zweiten Primerschicht 29 und der zweiten Beschichtung 31 müssen sorgfältig aufeinander und auf die verwendeten Druckfarben abgestimmt werden, um eine gute Produktqualität des Kartenkörpers 40 zu gewährleisten. Auch die verwendeten Druckverfahren müssen auf das Material der bedruckten Schicht abgestimmt werden. Schon ein Austausch von nur einer der Kartenschichten 21, 22, 23, 24 gegen eine Kartenschicht aus einem anderen Material kann dazu führen, dass die gewählten Druckfarben nicht mehr zufriedenstellend haften und eine andere Primerschicht gewählt werden muss. Möglicherweise kann auch überhaupt keine zufriedenstellende Haftung mehr erzielt werden, so dass auf andere Druckfarben und ggf. andere Druckverfahren zurückgegriffen werden muss, was wiederum dazu führen kann, dass keine zufriedenstellende Verbindung zwischen der modifizierten Druckschicht und dem damit zu verbindenden Kartenmaterial mehr erzielt werden kann. Dann muss die Beschichtung dieses Kartenmaterials gegen eine andere Beschichtung ausgetauscht werden.

Es ist offensichtlich, dass bei der Vielzahl von in Frage kommenden Kartenmaterialien, Druckfarben und Druckverfahren eine Vielzahl an Material-, Farb- und Verfahrenskombinationen möglich ist, wobei für jede denkbare Kombination eine Optimierung der Materialien und Verfahren durchgeführt werden muss. Unter Berücksichtigung der Anzahl an Schichten üblicher Kartenkörper, der gängigen Kartenkörpermaterialien, der zur Verfügung stehenden Druckfarben und haftungsverbessernden Beschichtungen, müssen bei der konventionellen Kartenkörperherstellung eine Vielzahl von Material- und Farbkombinationen optimiert werden. Es ist nicht möglich, das jeweils optimale Druckverfahren einzusetzen.

Figur 2 zeigt einen Kartenkörper 40 des Stands der Technik, der sich von dem in Figur 1 dargestellten Kartenkörper lediglich dadurch unterscheidet, dass er eine weitere Innenschicht 25 aufweist. Diese dritte Innenschicht 25 wird mittels einer ersten Kaschierhilfe 32 mit der ersten Innenschicht 23, und mittels der zweiten Kaschierhilfe 33 mit der zweiten Innenschicht 24 laminiert. Mindestens eine der Innenschichten 23, 24, 25 sollte opak sein, um zu verhindern, dass bei einer Aufsicht auf eine der Außenschichten 21, 22 beide Druckschichten 26, 27 erkennbar sind. Die Außenschichten 21 und 22 müssen natürlich transparent sein, damit die jeweilige darunter angeordnete Druckschicht 26 bzw. 27 erkennbar ist.

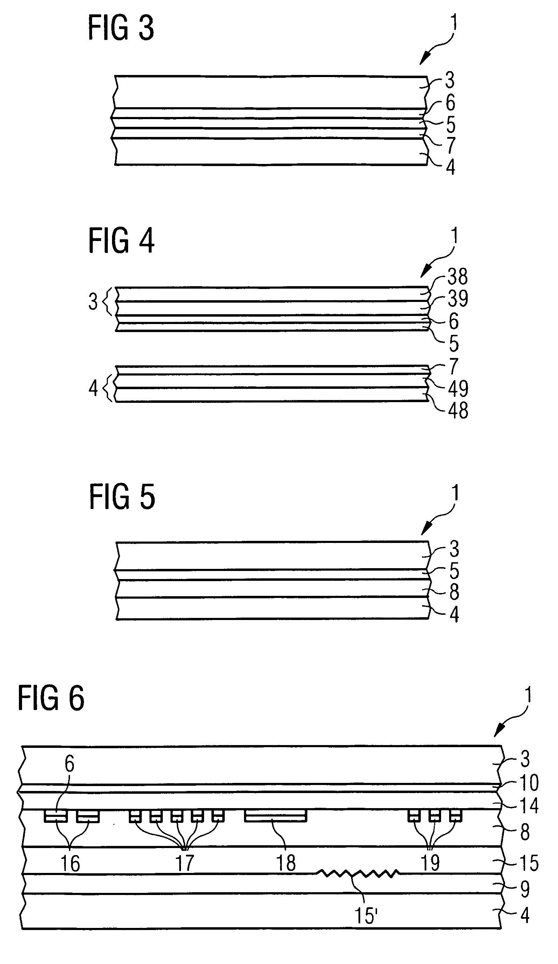

Die Figuren 3 bis 6 zeigen jeweils Schnitte durch Ausführungsformen von erfindungsgemäßen Druckträgerverbundmaterialien 1. Die in Figur 3 dargestellte Ausführungsform weist eine Druckträgerschicht 3, eine Druckschutzschicht 4 und eine sandwichartig dazwischen eingeschlossene Designdruckschicht 5 auf. Zur Verbesserung der Haftung der Designdruckschicht 5 an der Druckträgerschicht 3 ist eine erste Primerschicht 6 vorgesehen, und zur Verbesserung der Haftung zwischen der Designdruckschicht 5 und der Druckschutzschicht 4 ist eine zweite Primerschicht 7 vorgesehen. Mindestens eine der Schichten 3 und 4 sollte transparent sein, damit das Druckträgerverbundmaterial 1 in dem Schichtverbund einer Karte so angebracht werden kann, dass die Druckschicht 5 sichtbar ist. In dem dargestellten Beispiel wird die bedruckte Schicht des Druckträgerverbundmaterials durch die Druckträgerschicht 3 gebildet und die mit der bedruckten Schicht dann verbundene Schicht durch die Druckschutzschicht 4. Es ist jedoch auch denkbar, die Druckschutzschicht 4 zu bedrucken und die Druckträgerschicht 3 auf der bedruckten Seite der Druckschutzschicht 4 anzuordnen. In dem fertiggestellten Druckträgerverbundmaterial 1 ist in der Regel nicht mehr erkennbar, welche Schicht ursprünglich die Druckträgerschicht war, und welche Schicht ursprünglich die Druckschutzschicht war, die zum Schutz der Designdruckschicht mit der bedruckten Druckträgerschicht verbunden wurde. Bei dem in Figur 3 dargestellten Druckträgerverbundmaterial handelt es sich um eine Ausführungsform, bei der die Druckträgerschicht 3 und die Druckschutzschicht 4 miteinander laminiert wurden. Eine Laminierung sollte jedoch nur bei Kunststoffmaterialien mit sehr niedrigem Erweichungspunkt und einer relativ unempfindlichen Designdruckschicht 5 durchgeführt werden, da es ansonsten zu Qualitätsmängeln durch Verformen des Druckbilds kommen kann.

Figur 4 zeigt eine Ausführungsform des erfindungsgemäßen Druckträgerverbundmaterials 1, die sich von der in Figur 3 gezeigten Ausführungsform lediglich dadurch unterscheidet, dass die Druckträgerschicht 3 und die Druckschutzschicht 4 jeweils als Folienmaterial-Doppelschichten ausgebildet sind. Die Druckträgerschicht 3 besteht aus einer Außenschicht 38 und einer Innenschicht 39, die miteinander laminiert sind, und die Druckschutzschicht 4 besteht aus einer Außenschicht 48 und einer Innenschicht 49, die ebenfalls miteinander laminiert sind. Derartige Doppelschichten können die Optimierung und Anpassung von Kunststofffolienmaterialien (Druckträgerschicht und Druckschutzschicht und Kartenkörperschichten), Druckfarben/ Druckverfahren und Hilfsschichten (Primerschichtmaterialien, Kaschierklebstoffen, etc.) vereinfachen. Beispielsweise kann für die Innenschichten 39, 49 ein Kunststoffmaterial gewählt werden, das für die gewünschten Druckfarben und Druckverfahren optimal ist, während für die Außenschichten 38, 48 ein Kunststoffmaterial gewählt werden kann, das mit allen Kunststoffmaterialien, die üblicherweise zur Herstellung von Kartenkörpern verwendet werden, gut verbunden werden kann.

In Figur 5 ist eine Ausführungsform eines erfindungsgemäßen Druckträgerverbundmaterials 1 dargestellt, bei der die Druckträgerschicht 3 und die Druckschutzschicht 4, anders als bei den Ausführungsformen der Figuren 3 und 4, mittels einer Klebstoffschicht 8 miteinander verklebt sind. Die Verklebung der Druckträgerschicht und der Druckschutzschicht stellt eine besonders bevorzugte Ausführungsform dar, da auf das beim Laminieren erforderliche Erhitzen verzichtet werden kann. Dadurch gibt es wesentlich weniger Einschränkungen bei den verwendeten Folienmaterialien, Druckfarben und Druckverfahren. Insbesondere kann es nicht zu Passerproblemen beim Druckbild kommen, da das Druckbild nicht durch eine Verformung der Druckträgerschicht und der Druckschutzschicht, wie sie beim Laminieren häufig vorkommt, in Mitleidenschaft gezogen werden kann. Außerdem kann eine Klebstoffschicht zur Erzielung zusätzlicher Effekte genutzt werden. Beispielsweise können im Druckbild Unterbrechungen vorgesehen werden und der Klebstoff gefärbt werden, so dass die Farbe durch die Unterbrechungen im Druckbild durchscheint. Pigmente, die nur schwer gedruckt werden können, oder Metallpartikel, können mit Hilfe einer Schablone in Form eines zusätzlichen Druckbilds auf die Klebstoffschicht aufgestreut werden. Bei einer vollflächig ausgeführten Druckschicht 5 ist die Farbe des Klebstoffs unerheblich, da der Klebstoff durch das Druckbild verdeckt wird. Die in Figur 5 dargestellte Ausführungsform weist keine Primerschichten auf. Das Weglassen von Primerschichten ist nur bei wenigen Kombinationen von Folienmaterialien und Druckfarben möglich. In diesen Fällen können die Oberflächen der Folienmaterialien vor dem Bedrucken bzw. vor dem Verbinden mit der Druckschicht einer Coronabehandlung unterzogen werden.

Figur 6 zeigt eine weitere Ausführungsform eines erfindungsgemäßen Druckträgerverbundmaterials 1, und Figur 7 zeigt anhand einer schematischen Maschinenskizze, wie ein derartiges Druckträgerverbundmaterial hergestellt werden kann. In der Maschinenskizze der Figur 7 ist die Rolle R1 eine Vorratsrolle für die Druckträgerschicht 3, die Rolle R2 eine Vorratsrolle für die Druckschutzschicht 4, die Rolle R3 die Rolle, auf der das fertige Druckträgerverbundmaterial 1 aufgewickelt wird, und die Rollen R4, R5 und R6 sind optionale Vorratsrollen für zusätzliche Materialien, die ggf. in das Druckträgerverbundmaterial 1 integriert werden können. Die Pfeile geben die jeweiligen Drehrichtungen an. Mit P1 bis P20 sind Prozessstationen bezeichnet, wobei die in Figur 7 dargestellten Prozessstationen natürlich eine sehr spezielle Ausführungsform darstellen, und die für die Herstellung einer gewünschten Ausführungsform eines erfindungsgemäßen Druckträgerverbundmaterials tatsächlich benötigten Prozessstationen erheblich von der dargestellten Ausführungsform abweichen können.

Bei der einfachsten denkbaren Ausführungsform eines erfindungsgemäßen Druckträgerverbundmaterials kann die Herstellung beispielsweise folgendermaßen erfolgen: Von der Vorratsrolle R1 wird eine Druckträgerschicht 3 den Prozessstationen zugeführt. Dort wird sie bedruckt, beispielsweise in den Prozessstationen P7 bis P10, und anschließend in der Prozessstation P15 mit einem Klebstoff beschichtet. Von der Vorratsrolle R2 wird eine Druckschutzschicht 4 abgewickelt und in der Prozessstation P18 mit der bedruckten und mit Klebstoff beschichteten Druckträgerschicht 3 zusammengeführt und unter Druck verbunden. In P19 wird der Klebstoff durch UV-Bestrahlung gehärtet, und das fertige Druckträgerverbundmaterial 1 dann auf der Vorratsrolle R3 aufgewickelt. Alternativ kann das fertige Druckträgerverbundmaterial 1 in der Prozessstation P20 mittels eines Querschneiders geschnitten und die erhaltenen Druckträgerverbundmaterial-Bögen zu einem Stapel 20 aufgestapelt werden. Natürlich kann im Prinzip auch das von der Rolle R2 abgewickelte Folienmaterial bedruckt werden, oder es kann der Klebstoff, beispielsweise ein UV-aktivierbarer Klebstoff, in der Prozessstation P16 aufgetragen werden. Entsprechende Variationen der Verfahrensführung liegen im Kenntnisbereich eines Fachmanns.

Das in Figur 6 dargestellte Druckträgerverbundmaterial kann in der folgenden Weise hergestellt werden: Von der Vorratsrolle R1 wird eine Druckträgerschicht 3, die mit einer Schicht 10 aus UV-aktivierbarem Klebstoff beschichtet ist, abgewickelt und den Prozessstationen P1 bis P19 zugeführt. Von einer Vorratsrolle R4 wird ein metallisiertes Folienmaterial 14 abgewickelt und ebenfalls den Prozessstationen P1 bis P19 zugeführt. Die Folien 3 und 14 werden vor P1 zusammengeführt und bei P1 eine Coronabehandlung einer Oberfläche der Folie 14 durchgeführt. Die Pfeile geben jeweils die Bewegungsrichtungen der Folienbahnen an. Anschließend wird bei P2 eine Primerschicht 6 aufgetragen, wobei der Auftrag in Form des später aufzudruckenden Druckmotivs erfolgt. Bei P3 wird anschließend eine UV-Härtung durchgeführt. Danach wird die Druckschicht 5 aufgedruckt, die im vorliegenden Fall aus dem Effektfarbendruck 16, dem Prozessfarbendruck 17, dem Weißfarbendruck 18 und dem Spotfarbendruck 19 besteht. Der Effektfarbendruck 16 erfolgt bei P4, und der Weißdruck 18 erfolgt bei P5. Danach wird bei P6 eine UV-Härtung durchgeführt. Anschließend erfolgt der Prozessfarbendruck 17 bei P7 bis P10, dann der Spotfarbendruck 19 bei P11 bis P13, und anschließend wird wiederum eine UV-Härtung bei P14 durchgeführt. Abschließend wird bei P15 eine Schicht 8 aus UV-härtbarem Klebstoff aufgetragen.

Von einer Vorratsrolle R5 wird eine Hologrammfolie 15 abgewickelt und mit dem bedruckten Verbund aus den Folien 3 und 14 zusammengeführt. Gleichzeitig wird von der Vorratsrolle R2 eine Druckschutzschicht 4 abgewickelt, bei P17 einer Coronabehandlung unterzogen, und bei P16 mit einer Schicht 9 aus UV-härtbarem Klebstoff beschichtet. In den Klebstoff sind fluoreszierende Partikel eingestreut. Anstelle des Auftragens der Klebstoffschicht 9 könnte auch von der Vorratsrolle R6 ein doppelseitiges Klebeband abgewickelt werden und mit den übrigen Folienmaterialien zusammengeführt werden. Das Klebeband sowie die Folienmaterialien 14,15 sind optional, was durch die gestrichelte Darstellung angedeutet wird. Alle Folienmaterialien werden in der Prozessstation P18 unter Druck zusammengeführt, und die Klebstoffschichten bei P19 durch UV-Bestrahlung gehärtet. Abschließend wird das fertige Druckträgerverbundmaterial 1 entweder auf der Vorratsrolle R3 aufgewickelt oder mittels eines Querschneiders bei P20 zu Druckträgerverbundmaterial-Bögen geschnitten, und die Bögen werden zu dem Stapel 20 aufgestapelt. Das Folienmaterial 1 kann sowohl in Rollenform als auch in Stapelform problemlos bis zu seiner späteren Verwendung als Schicht in einem Kartenkörper gelagert werden ohne die Designdruckschicht 5 in irgendeiner Weise zu beschädigen.

Das auf die geschilderte Weise hergestellte Druckträgerverbundmaterial 1 ist aufgebaut wie in Figur 6 dargestellt. Bei der dargestellten Ausführungsform ist nicht die Druckträgerschicht 3 selbst bedruckt, sondern die mit Metallisierungen ausgestattete Folie 14. Die Folie 14 ist mittels der Klebstoffschicht 10 mit der Druckträgerschicht 3 verklebt. Bei der Druckträgerschicht 3 und der Folie 14 handelt es sich um transparente Folienmaterialien (wobei die Metallisierungen selbst natürlich nicht transparent sind), und bei der Druckschutzschicht 4 handelt es sich um ein opakes Folienmaterial. Bei Aufsicht auf die Druckträgerschicht 3 erkennt man die (nicht gezeigten) Metallisierungen der Folienschicht 14, das Druckbild aus den Aufdrucken 16, 17, 18 und 19 (auf der Primerschicht 6), sowie in einer Unterbrechung des Druckbilds das Hologramm 15' der Hologrammfolie 15. In den noch vorhandenen Lücken ist bei geeigneter Bestrahlung der fluoreszierende Klebstoff 9 erkennbar.

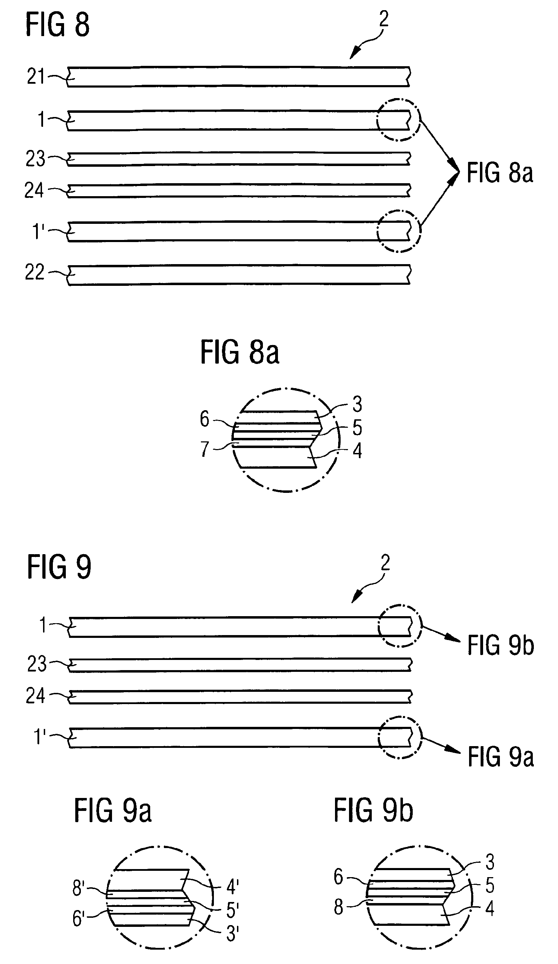

Figur 8 zeigt einen erfindungsgemäßen Kartenkörper 2 mit einem Schichtaufbau, der dem Schichtaufbau des in Figur 1 gezeigten Kartenkörpers 40 vergleichbar ist. Der Kartenkörper 2 weist eine erste Außenschicht 21 und eine zweite Außenschicht 22 sowie eine erste Innenschicht 23 und eine zweite Innenschicht 24 auf. Anders als bei dem Kartenkörper 40 sind auf die Innenschichten 23, 24 jedoch keine Druckschichten aufgedruckt. Die Druckschichten befinden sich vielmehr in den Kartenschichten 1,1', bei denen es sich um erfindungsgemäße Druckträgerverbundmaterialien handelt. Figur 8A zeigt ausschnittsweise Vergrößerungen der Kartenkörperschichten 1,1'.

Auf eine Druckträgerschicht 3 ist jeweils eine Designdruckschicht 5 aufgedruckt, wobei zur Haftungsverbesserung eine erste Primerschicht 6 vorgesehen ist. Mit der bedruckten Druckträgerschicht 3 durch Laminieren verbunden ist eine Druckschutzschicht 4, wobei wiederum zur Haftungsverbesserung eine zweite Primerschicht 7 vorgesehen ist. Da die Kartenkörperschichten 1,1'außenseitig nur Kunststoffmaterialien aufweisen, nämlich die Druckträgerschicht 3 und die Druckschutzschicht 4, können die Folienverbundmaterialien 1,1' bei der Herstellung des Kartenkörpers 2 genauso behandelt werden wie die übrigen Kartenkörperschichten 21, 22, 23, 24. Eine Abstimmung von Druckfarben, Druckverfahren, haftungsverbessernden Schichten und Kartenkörpermaterialien entfällt generell bei der Verwendung eines standardisierten Halbzeugs, wie es das erfindungsgemäße Druckträgerverbundmaterial darstellt. Bei der in Figur 8 gezeigten Ausführungsform des Kartenkörpers 2 müssen die Druckträgerschicht 3, die Druckschutzschicht 4, und die Außenschichten 21, 22 transparent sein, während die Innenschichten 23, 24 opak sein müssen, um eine beidseitige Sichtbarkeit der Druckbilder zu gewährleisten und gleichzeitig ein Durchscheinen der Druckbilder durch die Innenschichten zu verhindern.

Bei der in Figur 2 gezeigten Ausführungsform des Kartenkörpers 40 gemäß Stand der Technik könnte beispielsweise eine der bedruckten Innenschichten 23, 24 oder beide bedruckte Innenschichten 23, 24 durch ein erfindungsgemäßes Druckträgerverbundmaterial 1,1' ersetzt werden. Alternativ könnten auch die Innenschichten 23, 24 unbedruckt bleiben und die Innenschicht 25 durch ein erfindungsgemäßes Druckträgerverbundmaterial 1 ersetzt werden. Bei einem Druckträgerverbundmaterial 1 mit transparenter Druckträgerschicht 3 und opaker Druckschutzschicht 4 würde man dann einen Kartenkörper 2 mit nur vorderseitig oder nur rückseitig sichtbarer Designdruckschicht 5 erhalten.

Bei der in Figur 9 dargestellten Ausführungsform eines erfindungsgemäßen Kartenkörpers 2 werden erfindungsgemäße Druckträgerverbundmaterialien 1,1' als Außenschichten des Kartenkörpers verwendet. Transparente oder opake Kunststofffolien bilden die Kartenkörper-Innenschichten 23, 24. Die Figuren 9A und 9B zeigen ausschnittsweise Vergrößerungen der Außenschichten 1,1'. Die erste Außenschicht 1 ist so mit der ersten Innenschicht 23 verbunden, dass die transparente Druckträgerschicht 3 nach außen weist, und die zweite Außenschicht 1' ist so mit der zweiten Innenschicht 24 verbunden, dass die transparente Druckträgerschicht 3' nach außen weist. Die opake Druckschutzschicht 4 ist mit der ersten Innenschicht 23 verbunden, beispielsweise laminiert, und die opake Druckschutzschicht 4' ist mit der zweiten Innenschicht 24 verbunden, beispielsweise laminiert. Alternativ können die Schichten auch verklebt werden. In keinem Fall ist bei dem Verbinden der Schichten irgendeine besondere Form von Abstimmung erforderlich. Die Kartenkörperschichten 1,1' können mit den Kartenkörperschichten 23, 24 ungeachtet der integrierten Druckbilder 5, 5', genauso verbunden werden, wie dies bei Folienmaterialien 4, 4' der Fall wäre. Bei dem Kartenkörper 2 der Figur 9 werden Druckträgerverbundmaterialien 1,1' verwendet, bei denen die Druckschutzschichten 4, 4' mittels Klebstoffschichten 8, 8' aufgeklebt sind.

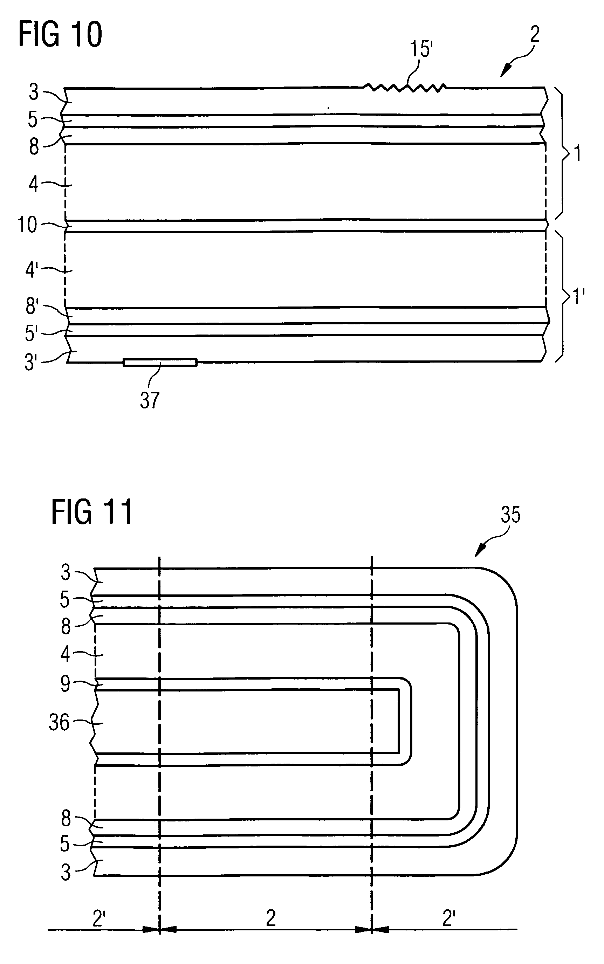

Der erfindungsgemäße Kartenkörper 2, der in Figur 10 dargestellt ist, besteht aus zwei erfindungsgemäßen Druckträgerverbundmaterialien 1,1', die mittels einer Klebstoffschicht 10 verbunden sind. Alternativ könnten die Druckträgerverbundmaterialien 1,1' auch miteinander laminiert sein. Das erste Druckträgerverbundmaterial 1 hat eine transparente Druckträgerschicht 3, die als Hologrammfolie mit einem Hologramm 15' ausgebildet ist. Auf die Druckträgerschicht 3 ist ein Druckbild 5 aufgedruckt, und die bedruckte Druckträgerschicht 3 ist mittels einer Klebstoffschicht 8 mit einer opaken Druckschutzschicht 4 verklebt. Das zweite Druckträgerverbundmaterial 1' hat eine transparente Druckträgerschicht 3', die mit einem Magnetstreifen 37 ausgestattet ist. Auf die Druckträgerschicht 3'aufgedruckt ist ein Druckbild 5', und die bedruckte Druckträgerschicht 3' ist mittels einer Klebstoffschicht 8' mit einer Druckschutzschicht 4' verklebt. Da der Kartenkörper 2 ausschließlich von den Druckträgerverbundmaterialien 1,1' gebildet wird, sind größere Schichtdicken erforderlich als bei einem Kartenkörper, der mehrere Folienschichten enthält. Typische Schichtdicken sind jeweils etwa 40 11m für die Druckträgerschichten 3, 3', etwa 20 µm für die Klebstoffschichten 8, 8', etwa 40 bis 300 µm für die Druckschutzschichten 4, 4', und etwa 20 µm für die Klebstoffschicht 10. Es versteht sich, dass diese Angaben lediglich beispielhaft sind.

Ein Kartenkörper wie der in Figur 10 dargestellte Kartenkörper 2 kann beispielsweise hergestellt werden, indem zunächst ein Druckträgerverbundmaterial in Bandform hergestellt wird, wie es in Figur 7 dargestellt ist. Das Band wird jedoch nicht über seine gesamte Breite identisch bedruckt, sondern es weist vielmehr eine gedachte Mittellinie auf, die sich über die gesamte Länge des Bandes erstreckt. Eine Hälfte des Bands weist Hologramme 15' auf, während die andere Hälfte des Bands Magnetstreifen 37 aufweist. Die Hälfte des Bands, die als Hologrammfolie ausgebildet ist, wird mit dem Druckbild 5 bedruckt, während die Hälfte des Bands mit Magnetstreifen 37 mit dem Druckbild 5' bedruckt wird. Das fertiggestellte Druckträgerverbundmaterial in Bandform wird mittels des Querschneiders bei P20 zu Bögen geschnitten, und diese Bögen werden jeweils entlang der gedachten Mittellinie gefaltet. Die gefalteten Bögen werden dann einer Laminierung unterzogen, um die Druckschutzschichten 4, 4' miteinander zu verbinden. Alternativ und bevorzugt wird vor der Faltung der Bögen eine Klebstoffschicht 10 aufgetragen, und die Druckschutzschichten 4, 4' mittels dieser Klebstoffschicht verbunden. Von der Druckträgerverbundmaterial-Doppelschicht werden dann Kartenkörper-Einzelnutzen abgetrennt, wie es in Figur 11 dargestellt ist.

Bei der in Figur 11 dargestellten Ausführungsform wird ein Druckträgerverbundmaterial in Bogenform hergestellt, das aus einer Druckträgerschicht 3, bedruckt mit einer Designdruckschicht 5, und einer Druckschutzschicht 4 besteht, die mittels einer Klebstoffschicht 8 miteinander verbunden sind. Der Druckträgerverbundmaterial-Bogen wird um eine Schicht 36 aus einem Kunststoffmaterial, die etwa halb so breit wie der Druckträgerverbundmaterial-Bogen ist, herumgefaltet. Dabei entsteht der Faltkörper 35. Das Druckträgerverbundmaterial kann entweder mit der Kunststoffschicht 36 laminiert werden, oder es kann eine Klebstoffschicht 9 zur Verklebung der Schichten 4 und 36 vorgesehen werden. Von dem Faltkörper 35 werden dann erfindungsgemäße Kartenkörper 2 abgetrennt. Die Faltkörperstücke 2' zwischen den Einzelnutzen 2 bzw. an der Faltkante des Faltkörpers 35 stellen ein Abfallprodukt dar. Beispielhafte Schichtdicken sind etwa 40 µm für die Druckträgerschicht 3, etwa 20 µm für die Klebstoffschicht 8, etwa 40 µm bis 240 µm für die Druckschutzschicht 4, etwa 20 µm für die Klebstoffschicht 9, und etwa 200 bis 600 µm für die Innenschicht 36. Die Schichtdicken können jedoch in relativ breiten Bereichen variiert werden, wie durch die gestrichelten Linien in den Figuren 10 und 11 angedeutet wird.

Es ist offensichtlich, dass das erfindungsgemäße Druckträgerverbundmaterial sowie die damit hergestellten Kartenkörper eine Vielzahl von Vorteilen besitzen. Da das erfindungsgemäße Druckträgerverbundmaterial eine Sandwichstruktur besitzt, bei der die Druckschicht zwischen Folienschichten eingeschlossen ist, so dass "außenseitig" nur Kunststoffmaterialien vorhanden sind, verhält sich das Druckträgerverbundmaterial bei der Herstellung eines Kartenkörpers wie eine Kunststofffolie ohne Druckschicht und kann wie eine unbedruckte Kunststofffolie behandelt und verarbeitet werden.

Der besondere Vorteil der erfindungsgemäßen Lösung liegt darin, dass mit einer geringen Anzahl verschiedener Druckträgerverbundmaterialien eine große Anzahl von Kartenkörpern hergestellt werden kann, die sich hinsichtlich Zahl, Material und Dicke der Kartenkörperschichten erheblich unterscheiden können. Der Grund ist, dass der Abstimmungsaufwand zwischen Druckschicht und zu bedruckender Folie bzw. zwischen Druckschicht und der mit der Druckschicht zu verbindenden Folie hoch ist, der Abstimmungsaufwand beim Verbinden von Folien untereinander jedoch gering ist. Die aufwändige Abstimmung muss nur für wenige Druckträgerverbundmaterialien durchgeführt werden, die dann weitgehend universell verwendet werden können.

Da die Designdruckschicht in dem Druckträgerverbundmaterial allseitig durch Kunststofffolien geschützt ist, kann das Druckträgerverbundmaterial in dem Schichtaufbau eines Kartenkörpers nicht nur als Innenschicht, sondern auch als Außenschicht verwendet werden. Die Orientierung ist dabei grundsätzlich beliebig, solange die außen liegende Schicht ausreichend transparent ist, um die Sichtbarkeit des Druckbilds zu gewährleisten.

Das erfindungsgemäße Druckträgerverbundmaterial ist im Rolle-zu-Rolle-Verfahren herstellbar, wodurch hohe Prozessgeschwindigkeiten erreicht werden können. Außerdem ist das fertiggestellte Druckträgerverbundmaterial problemlos lagerbar. Es treten keine Verblockungsprobleme auf, und das saubere Druckbild bleibt auch bei einer Weiterverarbeitung nach längerer Lagerung erhalten.

Da das erfindungsgemäße Druckträgerverbundmaterial in Rollenform bevorratet werden kann, kann auch die Herstellung von Kartenkörpern mit dem Druckträgerverbundmaterial im schnellen Rolle-zu-Rolle-Verfahren erfolgen. Die einzelnen Kartenschichten können dabei wahlweise verklebt oder laminiert werden.

Bei dem erfindungsgemäßen Druckträgerverbundmaterial können die einzelnen Folienschichten zwar ebenfalls laminiert werden, es ist jedoch bevorzugt, die Schichten zu verkleben. Dies hat den besonderen Vorteil, dass keine Gefahr einer Verformung des Druckbilds besteht. Überdies kann der verwendete Klebstoff zur Einbringung von Sicherheitsmerkmalen oder eines zusätzlichen Druckbilds genutzt werden.

## Patentansprüche

1. Druckträgerverbundmaterial (1;1') zur Verwendung als Schicht in einem Kartenkörper (2), insbesondere einer Mehrfarbendruckkarte, **dadurch gekennzeichnet, dass** es
- eine Druckträgerschicht (3; 3') aus einem bevorzugt transparenten ersten Kunststoffmaterial,
- eine Designdruckschicht (5; 5') auf einer Oberfläche der Druckträgerschicht (3; 3'), und
- eine Druckschutzschicht (4; 4') aus einem bevorzugt opaken zweiten Kunststoffmaterial aufweist, wobei
- die Druckträgerschicht (3; 3') und die Druckschutzschicht (4; 4') so miteinander verbunden sind, dass die Designdruckschicht (5; 5') zwischen der Druckträgerschicht und der Druckschutzschicht eingeschlossen ist.

2. Druckträgerverbundmaterial (1;1') nach Anspruch 1, **dadurch gekennzeichnet, dass** die Druckträgerschicht (3; 3') und die Druckschutzschicht (4; 4') durch Verkleben mittels mindestens einer Klebstoffschicht (8, 9) oder durch Laminieren miteinander verbunden sind.

3. Druckträgerverbundmaterial (1;1') nach Anspruch 1 oder 2, **dadurch gekennzeichnet, dass** zwischen der Druckträgerschicht (3; 3') und der Druckschicht (5; 5') und/oder zwischen der Druckschutzschicht (4; 4') und der Druckschicht (5; 5') eine Primerschicht (6, 7) vorgesehen ist.

4. Druckträgerverbundmaterial (1;1') nach einem der Ansprüche 1 bis 3, **dadurch gekennzeichnet, dass** das erste Kunststoffmaterial und das zweite Kunststoffmaterial gleich oder verschieden sind, bevorzugt gleich sind, wobei das erste und/oder das zweite Kunststoffmaterial ausgewählt ist aus der Gruppe, die besteht aus Polyestern, Polycarbonaten, Polyamiden, Polyimiden, Polyethylen, chloriertem Polyethylen, Polypropylen, Polystyrol, Polyethylenterephthalat, biaxial gestrecktem Polyethylenterephthalat, Polybutylenterephthalat, PolyethylenTerephthalat-Glycol-Copolymer, Polyvinylchlorid, Acrylnitril-Butadien-Styrol, Polyurethanen, Cycloolefin-Copolymeren und Blends dieser Polymere.

5. Druckträgerverbundmaterial (1;1') nach einem der Ansprüche 2 bis 4, **dadurch gekennzeichnet, dass** die Klebstoffschicht (8, 9) Träger eines Sicherheitsmerkmals in Form von Metallpartikeln, Farbstoffen oder Fluoreszenzstoffen ist, wobei der Klebstoff bevorzugt ein UV-aktivierbarer Klebstoff ist.

6. Druckträgerverbundmaterial (1;1') nach einem der Ansprüche 1 bis 5, **dadurch gekennzeichnet, dass** es zwischen der Druckträgerschicht (3; 3') und der Druckschutzschicht (4; 4') mindestens eine weitere, optional bedruckte, Folienschicht (14,15) aufweist, wobei bevorzugt mindestens eine der Schichten Druckträgerschicht, Druckschutzschicht und weitere Folienschicht ein Sicherheitsmerkmal aufweist.

7. Verfahren zur Herstellung eines Druckträgerverbundmaterials (1;1'), insbesondere für eine Mehrfarbendruckkarte, **gekennzeichnet durch** folgende Schritte:
- Bereitstellen einer bevorzugt transparenten Druckträgerschicht (3; 3') aus einem ersten Kunststoffmaterial, bevorzugt in Form eines Bands,
- Bereitstellen einer bevorzugt opaken Druckschutzschicht (4; 4') aus einem zweiten Kunststoffmaterial, bevorzugt in Form eines Bands,
- Bedrucken einer Oberfläche der Druckträgerschicht (3; 3') mit einer Designdruckschicht (5; 5'),
- Zusammenführen der mit der Designdruckschicht (5; 5') bedruckten Druckträgerschicht (3; 3') und der Druckschutzschicht (4; 4') dergestalt, dass die Druckschutzschicht die Druckschicht bedeckt, und
- Verbinden der Druckträgerschicht (3; 3') und der Druckschutzschicht (4; 4') dergestalt zu dem Druckträgerverbundmaterial (1;1'), dass die Druckschicht (5; 5') zwischen dem ersten Kunststoffmaterial und dem zweiten Kunststoffmaterial eingeschlossen wird.

8. Verfahren nach Anspruch 7, **dadurch gekennzeichnet, dass** die Druckträgerschicht (3; 3') und die Druckschutzschicht (4; 4') als Rollenmaterial bereitgestellt werden und in einem Rolle-zu-Rolle-Verfahren bedruckt und zu dem Druckträgerverbundmaterial (1; 1') verbunden werden.

9. Verfahren nach Anspruch 7 oder 8, **dadurch gekennzeichnet, dass** die Druckträgerschicht (3; 3') und die Druckschutzschicht (4; 4') mit mindestens einer weiteren Folienschicht (14, 15) zusammengeführt und verbunden werden, wobei die mindestens eine weitere Folienschicht (14,15) optional bedruckt wird und zwischen der Druckträgerschicht (3; 3') und der Druckschutzschicht (4; 4') eingeschlossen wird.

10. Verfahren nach einem der Ansprüche 7 bis 9, **dadurch gekennzeichnet, dass** die Druckträgerschicht (3; 3') und die Druckschutzschicht (4; 4'), und optional mindestens eine weitere Folienschicht (14, 15) mittels einer Klebstoffschicht (8, 9) miteinander verbunden werden.

11. Verfahren nach einem der Ansprüche 7 bis 10, **dadurch gekennzeichnet, dass** ein Druckträgerverbundmaterial (1;1') nach einem der Ansprüche 1 bis 6 hergestellt wird.

12. Kartenkörper (2), insbesondere einer Mehrfarbendruckkarte, mit mindestens zwei Schichten aus Kunststoffmaterial, die miteinander verklebt oder laminiert sind, und mit mindestens einer Designdruckschicht (5; 5'), die an der Vorderseite und/oder der Rückseite des Kartenkörpers (2) erkennbar ist, **dadurch gekennzeichnet, dass** mindestens eine der Schichten ein Druckträgerverbundmaterial (1;1') nach einem der Ansprüche 1 bis 6 ist.

13. Kartenkörper (2) nach Anspruch 12, **dadurch gekennzeichnet, dass** er zwei Außenschichten (21, 22) und mindestens eine Innenschicht (23, 24; 36) aufweist, wobei mindestens eine der Schichten ein Druckträgerverbundmaterial (1;1') nach einem der Ansprüche 1 bis 6 ist, dessen Designdruckschicht (5; 5') an der Vorderseite und/ oder der Rückseite des Kartenkörpers (2) erkennbar ist.

14. Kartenkörper (2) nach Anspruch 12 oder 13, **dadurch gekennzeichnet, dass** er zwei Schichten aus Druckträgerverbundmaterial (1;1') nach einem der Ansprüche 1 bis 6 aufweist, wobei die Schichten (1;1')
- eine Außenschicht (21; 22) und eine Innenschicht (23; 24) oder
- zwei Außenschichten (21, 22) oder
- zwei Innenschichten (23, 24) des Kartenkörpers (2) sind und gleich oder verschieden sein können und wobei die Designdruckschichten (5, 5') an der Vorderseite und an der Rückseite des Kartenkörpers (2) erkennbar sind.

15. Kartenkörper (2) nach Anspruch 12, **dadurch gekennzeichnet, dass** er zwei Schichten aus Druckträgerverbundmaterial (1;1') nach einem der Ansprüche 1 bis 6 aufweist, die gleich oder verschieden sein können und die dergestalt mittels einer Klebstoffschicht (10) unmittelbar miteinander verbunden sind, dass ihre Druckschichten (5, 5') an der Vorderseite und an der Rückseite des Kartenkörpers (2) erkennbar sind.

16. Kartenkörper (2) nach Anspruch 12, **dadurch gekennzeichnet, dass** er zwei Außenschichten (21, 22) und mindestens eine Innenschicht (23, 24; 36) aufweist, wobei die beiden Außenschichten (21, 22) gleiche oder verschiedene Druckträgerverbundmaterialien (1;1') nach einem der Ansprüche 1 bis 6 sind, die dergestalt mit der mindestens einen Innenschicht (23, 24; 36) verbunden sind, dass ihre Designdruckschichten (5; 5') an der Vorderseite und an der Rückseite des Kartenkörpers (2) erkennbar sind.

17. Verfahren zur Herstellung eines Kartenkörpers (2) mit mindestens zwei Schichten aus Kunststoffmaterial und mit mindestens einer Designdruckschicht (5; 5'), die an der Vorderseite und/ oder an der Rückseite des Kartenkörpers (2) erkennbar ist, **gekennzeichnet durch** folgende Schritte:
- Bereitstellen mindestens zweier Kunststoff-Flachmaterialien, wobei mindestens eines der Kunststoff-Flachmaterialien ein Druckträgerverbundmaterial (1,1') nach einem der Ansprüche 1 bis 6 ist,
- Zusammenführen der mindestens zwei Kunststoff-Flachmaterialien, und
- Verkleben oder Laminieren der Kunststoff-Flachmaterialien zu dem Kartenkörper (2).

18. Verfahren nach Anspruch 17, **dadurch gekennzeichnet, dass** die Kunststoff-Flachmaterialien als Rollenmaterialien in Bandform bereitgestellt werden und in einem Rolle-zu-Rolle-Verfahren miteinander verklebt oder laminiert werden.

19. Verfahren zur Herstellung eines Kartenkörpers (2) mit mindestens zwei Schichten aus Kunststoffmaterial und mit zwei Designdruckschichten (5, 5'), die an der Vorderseite und an der Rückseite des Kartenkörpers (2) erkennbar sind, **gekennzeichnet durch** folgende Schritte:
- Bereitstellen eines Druckträgerverbundmaterials (1; 1') nach einem der Ansprüche 1 bis 6,
- optional Bereitstellen mindestens eines Kunststoff-Flachmaterials, und
- Falten des Druckträgerverbundmaterials (1;1') unter Ausbildung einer Druckträgerverbundmaterial-Doppelschicht,
- miteinander Verkleben oder Laminieren der aneinander angrenzenden Schichten der Druckträgerverbundmaterial-Doppelschicht zu einem Kartenkörperschichtmaterial, oder
- Falten des Druckträgerverbundmaterials (1;1') um das mindestens eine Kunststoff-Flachmaterial unter Ausbildung einer Schichtstruktur mit dem mindestens einen Kunststoff-Flachmaterial als Innenschicht (en) und dem Druckträgerverbundmaterial (1;1') als Außenschichten,
- miteinander Verkleben oder Laminieren der aneinander angrenzenden Schichten der Schichtstruktur zu einem Kartenkörperschichtmaterial, und
- Abtrennen von Kartenkörpern (2) von dem Kartenkörperschichtmaterial.

20. Verfahren nach einem der Ansprüche 17 bis 19, **dadurch gekennzeichnet, dass** ein Kartenkörper (2) nach einem der Ansprüche 12 bis 16 hergestellt wird.
